# EUROPÄISCHE PATENTSCHRIFT

(11) **EP 1 789 318 B1**
(45) Veröffentlichungstag und Bekanntmachung des Hinweises auf die Patenterteilung: **26.12.2007**
(21) Anmeldenummer: 05774026.8
(22) Anmeldetag: 07.07.2005
(51) Int. Cl.: B64D 11/06, B60N 2/66

(54) **FAHRGASTSITZ, INSBESONDERE FLUGGASTSITZ**
PASSENGER SEAT, IN PARTICULAR AIRCRAFT PASSENGER SEAT
SIEGE PASSAGER DE VEHICULE, EN PARTICULIER SIEGE PASSAGER D'AVION

(30) Priorität: 14.09.2004 DE 102004044235
(43) Veröffentlichungstag der Anmeldung: 30.05.2007
(73) Patentinhaber: Recaro Aircraft Seating GmbH & Co. KG, 74523 Schwäbisch Hall (DE)
(72) Erfinder: PILGRAM, Christian, 88085 Langenargen (DE)
(74) Vertreter: Bartels, Martin Erich Arthur
(86) Internationale Anmeldenummer: PCT/EP2005/007328
(87) Internationale Veröffentlichungsnummer: WO 2006/029666

(56) Entgegenhaltungen:
- EP-A- 0 301 938
- US-A- 5 816 654

## Beschreibung

Die Erfindung bezieht sich auf einen Fahrgastsitz, insbesondere Fluggastsitz, mit Sitzkomponenten wie Sitzteil und an einem Rückenlehnenrahmen befindlicher Rückenlehne, die zumindest ein der Abstützung eines betreffenden Körperteiles des Sitzbenutzers dienendes Abstützteil aufweist, das mittels einer Einstelleinrichtung relativ zum Rückenlehnenrahmen bewegbar ist.

Ein Sitz dieser Art ist bereits aus der EP 0 639 479 B1 oder EP 0 301 938 bekannt. Sitze dieser Art bieten in aller Regel die Möglichkeit der wahlweisen Lageeinstellung zumindest einiger Sitzkomponenten, sodass der Fahrgast oder Sitzbenutzer eine Anpassung der betreffenden Komponenten an seine Bedürfnisse vornehmen kann. Werden derartige Sitze für die Bestuhlung von Verkehrsflugzeugen benutzt, dann sind insbesondere an die Funktion der Rückenlehne, genauer gesagt an die Einstellbarkeit von Abstützelementen der Rückenlehne, besondere, spezielle Anforderungen zu stellen. So ist es im Hinblick auf den Sitzkomfort und insbesondere aus Sicherheitsgründen besonders wichtig, dass der Neigungswinkel einstellbar ist, unter dem die Rückenlehne den Rücken des Sitzbenutzers abstützt. Um den flugbetrieblichen Sicherheitsbestimmungen gerecht zu werden, muss die Rückenlehne zumindest während der Betriebsphasen des Startens, des Landens und des Rollens einen Neigungswinkel zur Verfügung stellen, der einer aufrechten Sitzposition des Sitzbenutzers entspricht. Andererseits muss aus Komfortgründen die Möglichkeit bestehen, den Neigungswinkel der Rückenlehne so zu verringern, dass der Sitzbenutzer eine zurückgelehnte Ruheposition einnehmen kann, die, was insbesondere bei Langstreckenflügen besonders bedeutsam ist, als Schlafposition genutzt werden kann.

Üblicherweise ist, um diesen Anforderungen gerechtzu werden, bei bekannten, derartigen Sitzen eine mechanische, vom Sitzbenutzer steuerbare Einstellmechanik vorhanden, mittels deren der Neigungswinkel betreffender Abstützteile der Rückenlehne relativ zum Rückenlehnenrahmen oder die Neigung des Rückenlehnenrahmens selbst einstellbar ist. Die hierfür vorgesehene Stelleinrichtung führt zu einer Erhöhung des Gewichtes, da schwere mechanische Komponenten wie Gasfedern erforderlich sind. In Verbindung mit den erforderlichen, zugehörigen Steuerelementen ergeben sich eine Komplizierung des Sitzsystemes sowie hohe Herstellungskosten.

Im Hinblick auf diesen Stand der Technik liegt der Erfindung die Aufgabe zugrunde, einen Fahrgastsitz, insbesondere Fluggastsitz, zur Verfügung zu stellen, der die Möglichkeit der Einstellung der wirksamen Neigung der Rückenlehne bietet, sich dessen ungeachtet jedoch durch eine besonders einfache, kostengünstige und leichtgewichtige Bauweise auszeichnet.

Diese Aufgabe löst erfindungsgemäß ein Fahrgastsitz, der die Merkmale des Patentanspruchs 1 in seiner Gesamtheit aufweist.

Wie im kennzeichnenden Teil des Anspruches 1 ausgeführt, ist erfindungsgemäß eine an ihrem oberen Ende am Rückenlehnenrahmen aufgehängte Bahn als bewegliches Abstützteil vorgesehen, an deren unterem Ende eine die Einstelleinrichtung bildende Zugeinrichtung so angreift, dass das untere Ende der Bahn aus einer längs der Rückenlehne herabhängenden Position an ihrem unteren Ende nach vorn gezogen werden kann. Die Bahn kann auf diese Weise so gespannt werden, dass sich für den Rücken des Sitzbenutzers eine Abstützfläche mit entsprechend verändertem Neigungswinkel ergibt.

Die Bahn kann am Rückenlehnenrahmen so aufgehängt sein, dass sie im Bereich der unteren Hälfte der Rückenlehne die Abstützfläche bildet. Durch Ziehen des vorderen Endes der Bahn nach vorn um individuell gewünschte Zugstrecken ist der untere Rückenbereich des Sitzbenutzers bis zur Lordose optimal abstützbar. Langstreckenflüge werden dadurch für den Sitzbenutzer, der eine zurückgelehnte Schlafposition einnehmen kann, besonders angenehm.

Ein besonderer Vorteil des erfindungsgemäßen Sitzes besteht darin, dass eine Vergrößerung des wirksamen Rückenlehnenwinkels (Neigung nach hinten) erreicht werden kann, ohne dass diese Einstellmaßnahme den Freiraum (living-space) des nächst hinteren Sitzbenutzers beeinträchtigt.

Die das bewegbare Abstützteil bildende Bahn kann durch ein entsprechend zugfestes Netz gebildet sein. Vorzugsweise handelt es sich um ein feinmaschiges, aus Strängen hoher Zugfestigkeit gebildetes Netz.

Bei vorteilhaften Ausführungsbeispielen ist eine sich im Wesentlichen über die gesamte Breite der Rückenlehne von Seitenholm zu Seitenholm erstrekkende Bahn vorgesehen.

Die Bahn kann hierbei an beiden Eckbereichen ihres oberen Endes am jeweils zugeordneten Seitenholm des Rückenlehnenrahmens unmittelbar aufgehängt sein.

Vorzugsweise ist die Bahn, bezogen auf die Hauptlängsachse der Rückenlehne, mit ihrem oberen Ende im mittleren Längenbereich der Rückenlehne aufgehängt, wobei die auf die Hauptlängsachse der Rückenlehne bezogene Länge der Bahn so gewählt ist, dass sie sich bei der herabhängenden Position mit ihrem vorderen Ende zumindest bis zum Bereich der Sitzfläche des Sitzteiles erstreckt. Die Einstellung der wirksamen Neigung der Rückenlehne erfolgt somit durch Veränderung der Lehnenkonfiguration im unteren Rückenbereich des Sitzbenutzers, sodass dieser nicht nur eine besonders flache Sitzposition einnehmen kann, sondern auch eine verbesserte Abstützung des Beckenbereichs des Sitzbenutzers erreicht wird, sodass das Schlafen im Sitzen erleichtert ist.

Eine besonders einfache Bauweise ergibt sich, wenn die am unteren Ende der Bahn angreifende, als Einstelleinrichtung dienende Zugeinrichtung Zugglieder aufweist, die jeweils an den seitlichen Eckbereichen des unteren Endes der Bahn an dieser angreifen.

Wenn die Zugeinrichtung so ausgebildet ist, dass an den seitlich an der Bahn angreifenden Zuggliedern wahlweise unterschiedlich starke Zugkräfte erzeugbar sind, kann die Bahn nach Wunsch nur einseitig verstellbar sein oder an ihren Seiten unterschiedlich weit nach vorn vorgezogen werden. Dadurch ist für den Sitzbenutzer eine seitliche Schlafposition bei gleichzeitiger Beckenunterstützung möglich.

Vorzugsweise ist die Bahn an der Rückenlehne so angeordnet, dass sie sich zumindest mit ihrem oberhalb des unteren Endbereiches befindlichen Flächenbereich unterhalb eines Polster- oder Deckelementes erstreckt, das in dem die Bahn überdeckenden Bereich durch die Einstellbewegung der Bahn nach vorn mitbewegbar ist.

Nachstehend ist die Erfindung anhand von in der Zeichnung dargestellten Ausführungsbeispielen im Einzelnen erläutert. Es zeigen:
- Fig. 1: eine stark schematisch vereinfacht und perspektivisch gezeichnete Schrägansicht nur der Rückenlehne und eines Teils des daran angrenzenden Sitzteiles eines Ausführungsbeispieles des erfindungsgemäßen Sitzes in Form eines Fluggastsitzes und
- Fig. 2: eine der Fig. 1 entsprechende Darstellung eines zweiten Ausführungsbeispieles.

In den Figuren ist die Erfindung anhand eines Fluggastsitzes erläutert, bei dem die Rückenlehne als Ganzes mit 1 und der Sitzteil als Ganzes mit 3 bezeichnet sind. Die Rückenlehne weist einen Rückenlehnenrahmen 7 mit Seitenholmen 5 auf. Am Sitzteil 3 ist eine Sitzfläche mit 9 bezeichnet. Die Sitzfläche ist durch ein geeignetes Bauteil, etwa ein Formteil aus Kunststoff, gebildet, das eine Auflagefläche für ein nicht gezeigtes Sitzpolster bildet. In bei derartigen Sitzen üblicher Weise kann das die Sitzfläche 9 bildende Bauteil entlang seitlicher Sitzholme 11, die Fortsetzungen der Seitenholme 5 der Rückenlehne 1 bilden, in Sitzlängsrichtung lageverstellbar sein.

An der Rückenlehne 1 befindet sich zwischen den Seitenholmen 5 ein Rükkenlehnenpolster 13 als Haupt-Abstützteil für den Rücken des Sitzbenutzers. Zusätzlich hierzu ist als relativ zum Rückenlehnenrahmen 7 bewegbares Abstützteil eine am Rückenlehnenrahmen 7 aufgehängte Bahn in Form eines Netzes 15 vorgesehen. Dabei handelt es sich vorzugsweise um ein feinmaschiges Netz mit einer Maschenweite, die eine gewisse Feuchtigkeitsdurchlässigkeit bietet, wie sie für Sitzmaterialien erwünscht ist. Das Netz 15 ist aus zugfesten Strängen aufgebaut, sodass eine Bahn hoher Zugfestigkeit gebildet wird. Als Strangmaterial kommen feuerresistente, nicht dehnbare Werkstoffe infrage.

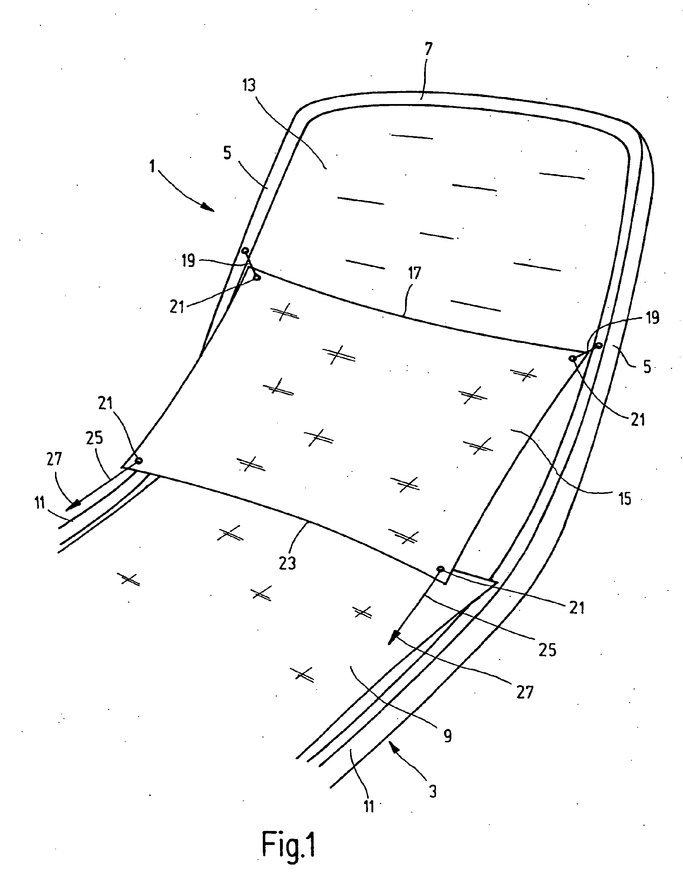

Wie aus Fig. 1 deutlich ersichtlich ist, ist das Netz 15 an seinem oberen Ende 17 in beiden seitlichen Eckbereichen an den Seitenholmen 5 der Rükkenlehne 7 in deren mittlerem Längenbereich aufgehängt, wobei als Aufhängung dienende Laschen 19 in in das Netz 15 eingearbeitete Verstärkungsösen 21 eingreifen. Wie Fig. 1 zeigt, erstreckt sich das Netz 15, das eine am Rückenlehnenrahmen 7 aufgehängte, bewegliche Bahn bildet, im Wesentlichen über die ganze Breite der Rückenlehne von Seitenholm 5 zu Seitenholm 5, wobei die auf die Hauptlängsachse der Rückenlehne 1 bezogene Länge des Netzes 15 so bemessen ist, dass sich das untere Ende 23 bis zur Sitzfläche 9 des Sitzteiles 3 erstreckt.

In entsprechender Weise wie beim oberen Ende 17 des Netzes 15 sind in den beiden seitlichen Eckbereichen am unteren Ende 23 ebenfalls Verstärkungsösen 21 eingearbeitet, mit denen Zugglieder in Eingriff sind, bei denen es sich beim gezeigten Beispiel um Zugseile 25 handelt. Die Zugseile 25 sind entlang der seitlichen Sitzholme 11 nach vorn zu je einer jedem Zugseil 25 zugeordneten Zugeinrichtung geführt, die Teil einer Einstelleinrichtung sind, die in der Zeichnung nicht dargestellt ist, weil sie, entsprechend den jeweiligen Gegebenheiten, unterschiedlich sein kann. Die Einstelleinrichtung muss lediglich so beschaffen sein, dass die den Zugseilen 25 zugeordneten Zugeinrichtungen an den Zugseilen 25 Zugkräfte wählbarer Stärke erzeugen, die entsprechend der an den Zugseilen 25 eingezeichneten Pfeile 27 nach vorn wirksam sind.

Fig. 1 zeigt eine Rückenlehnen-Einstellposition, bei der durch in beiden Zugseilen 25 wirkende Zugkräfte gleicher Stärke die durch das Netz 15 gebildete Bahn an ihrem unteren Ende 23 über die Sitzfläche 9 hinweg nach vorn gezogen ist, sodass die Rückenlehne 1 entsprechend dieser Position des Netzes 15 für den Sitzbenutzer eine zurückgelehnte Sitzposition bewirkt.

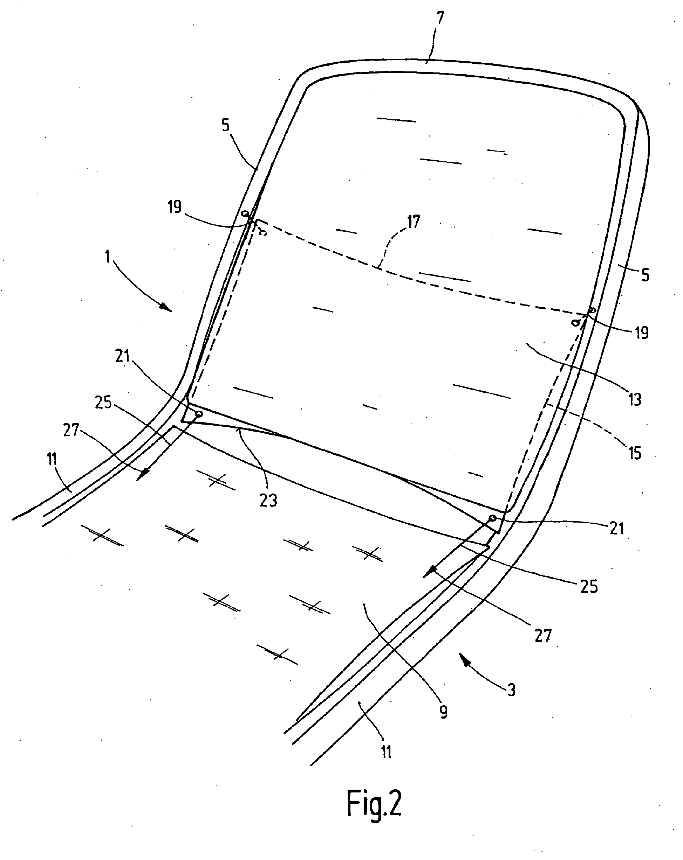

Bei dem in Fig. 2 dargestellten, leicht abgewandelten Ausführungsbeispiel ist das Netz 15, das in gleicher Weise wie bei Fig. 1 ausgebildet und an den Seitenholmen 5 des Rückenlehnenrahmens 7 aufgehängt ist, im Unterschied zu Fig. 1 in der der aufrechten Position entsprechenden Einstellposition gezeigt, in der es entlang der Rückenlehne 1 herabhängt, weil in den Zugseilen 25, die in gleicher Weise wie bei Fig. 1 mit Zugeinrichtungen verbunden sind, keine Zugkraft herrscht. Im weiteren Unterschied zu Fig. 1 ist die durch das Netz 15 gebildete bewegliche Bahn nicht oberhalb des Haupt-Rückenlehnenpolsters 13 angeordnet, sondern ist von diesem überdeckt. Das Polster 13 ist in dem das Netz 15 überdeckenden Bereich bei der Einstellbewegung des Netzes 15 mitbeweglich, sodass der untere Bereich dieses Polsters 13 mit dem Netz 15 nach vorn gezogen werden kann, wenn in den Zugseilen 25 eine entsprechende Zugkraft erzeugt wird, um die Lehnenneigung zu variieren, sodass auch bei dem Beispiel von Fig. 2 die in Fig. 1 gezeigte Einstellposition erreicht werden kann.

Wie bereits erwähnt, können in den Zugseilen 25 unterschiedlich starke Zugkräfte erzeugt werden, sodass die durch das Netz 15 oder den das Netz 15 überliegenden Bereich des Polsters 13 gebildete Abstützfläche an beiden Seiten unterschiedlich geneigt sein kann. Dadurch kann eine seitliche Schlafposition mit gleichzeitiger Beckenunterstützung des Sitzbenutzers erreicht werden.

Wenn, wie bereits angedeutet, das die Sitzfläche 9 bildende Bauteil in bei derartigen Sitzen üblicher Weise längs der Seitenholme 11 in Sitzlängsrichtung zur Lageeinstellung verschiebbar ist, ist die Anordnung vorzugsweise so getroffen, dass die Einstellbewegung des Netzes 15, bei der der Bereich des unteren Endes 23 des Netzes 15 nach vorn gezogen wird, mit einer entsprechenden Einstellbewegung der Sitzfläche 9 nach vorn kombiniert werden kann. Wenn eine manuelle Lageverschiebung des die Sitzfläche 9 bildenden Bauteiles oder ein Stellantrieb hierfür vorgesehen ist, kann die Einstellbewegung des die Sitzfläche 9 bildenden Bauteiles über die Zugseile 25 unmittelbar auf das Netz 15 übertragen werden. Alternativ kann mittels der den Zugseilen 25 zugeordneten Zugeinrichtungen eine nicht zwangsmäßig mit der Einstellbewegung der Sitzfläche 9 gekoppelte, individuelle Lageverstellung des Netzes 15 vorgesehen sein, sodass das Netz 15 auf Wunsch einseitig oder beidseitig um Wegstrecken vorgezogen werden kann, die gegenüber der Längsverschiebung des die Sitzfläche 9 bildenden Bauteiles unterschiedlich sind.

## Patentansprüche

1. Fahrgastsitz, insbesondere Fluggastsitz, mit Sitzteil (3) und an einem Rückenlehnenrahmen (7) befindlicher Rückenlehne (1), die zumindest ein der Abstützung eines betreffenden Körperteiles des Sitzbenutzers dienendes Abstützteil (15) aufweist, das mittels einer Einstelleinrichtung (25) relativ zum Rückenlehnenrahmen (7) bewegbar ist, wobei als bewegbares Abstützteil eine sich zwischen den Seitenrändern (5) des Rückenlehnenrahmens (7) erstreckende Bahn (15) vorgesehen ist, die an ihrem oberen Ende (17) am Rückenlehnenrahmen (7) aufgehängt ist, **dadurch gekennzeichnet, dass** an deren unterem, dem Sitzteil (3) benachbarten Ende (23) die als Zugeinrichtung (25) ausgebildete Einstelleinrichtung angreift, mittels deren auf das untere Ende (23) der Bahn (15) eine Zugkraft ausübbar ist, um die Bahn (15) aus einer längs der Rückenlehne (1) herabhängenden Position mit ihrem unteren Ende (23), bezogen auf die Längsrichtung der Sitzfläche (9) des Sitzteiles (3), nach vorn zu ziehen.

2. Sitz nach Anspruch 1, **dadurch gekennzeichnet, dass** die Bahn durch ein Netz (15) gebildet ist.

3. Sitz nach Anspruch 2, **dadurch gekennzeichnet, dass** das die Bahn bildende Netz (15) ein feinmaschiges, aus Strängen hoher Zugfestigkeit gebildetes Netz ist.

4. Sitz nach einem der Ansprüche 1 bis 3, **dadurch gekennzeichnet, dass** eine sich im Wesentlichen über die gesamte Breite der Rückenlehne (1) von Seitenholm (5) zu Seitenholm (5) erstreckende Bahn (15) vorgesehen ist.

5. Sitz nach einem der Ansprüche 1 bis 4, **dadurch gekennzeichnet, dass** die Bahn (15), bezogen auf die Hauptlängsachse der Rückenlehne (1), mit ihrem oberen Ende (17) im mittleren Längenbereich der Rückenlehne (1) aufgehängt ist und sich in der herabhängenden Position mit ihrem vorderen Ende (23) zumindest bis zum Bereich der Sitzfläche (9) des Sitzteiles (3) erstreckt.

6. Sitz nach Anspruch 5, **dadurch gekennzeichnet, dass** die Bahn (15) an beiden Eckbereichen ihres oberen Endes (17) am jeweils zugeordneten Seitenholm (5) des Rückenlehnenrahmens (7) aufgehängt ist.

7. Sitz nach einem der Ansprüche 1 bis 6, **dadurch gekennzeichnet, dass** die am unteren Ende (23) der Bahn (15) angreifende Zugeinrichtung Zugglieder (25) aufweist, die jeweils an den seitlichen Eckbereichen des unteren Endes (23) der Bahn (15) an dieser angreifen.

8. Sitz nach Anspruch 7, **dadurch gekennzeichnet, dass** die Zugglieder (25) in in die Bahn (15) eingearbeitete Verstärkungsösen (21) eingreifen.

9. Sitz nach Anspruch 7 oder 8, **dadurch gekennzeichnet, dass** eine Zugeinrichtung vorgesehen ist, mittels deren in den Zuggliedern (25) wahlweise unterschiedlich starke Zugkräfte erzeugbar sind.

10. Sitz nach einem der Ansprüche 1 bis 9, **dadurch gekennzeichnet, dass** sich die Bahn (15) in dem sich oberhalb ihres unteren Endes (23) befindlichen Flächenbereich unterhalb eines Polster- oder Deckelementes (13) erstreckt, das in dem die Bahn (15) überdeckenden Bereich durch die Einstellbewegung der Bahn (15) nach vorn mit dieser mitbewegbar ist.

## Claims

1. Vehicle passenger seat, in particular airplane passenger seat, with a seat part (3) and a back rest (1) located within a back rest frame (7), comprising at least one support part (15) serving for supporting the relevant body part of the seat user, the same being moveable by means of an adjustment means (25) relative to the back rest frame (7), **characterised in that** a strip (15) extending between the side edges (5) of the back rest frame (7) is envisaged as a moveable support part, the same being suspended on the back rest frame (7) with its upper end (17), and at the lower end (23) of which adjacent to the seat part (3) the adjusting means forming the tensioning means (25) is engaged, with which a tensioning force can be applied to the lower end (23) of the strip (15) in order to pull the strip (15) forwards at its lower end (23) in relation to the longitudinal direction of the seat surface (9) of the seat part (3) from a position hanging from the back rest (1).

2. Seat according to Claim 1, **characterised in that** the strip is formed by a mesh (15).

3. Seat according to Claim 2, **characterised in that** the mesh (1) forming the strip consists of a fine mesh formed from strands with a high tensile strength.

4. Seat according to one of the Claims 1 to 3, **characterised in that** a strip (15) extending substantially across the entire width of the back rest (1) from side frame (5) to side frame (5) is envisaged.

5. Seat according to one of the Claims 1 to 4, **characterised in that** the strip (15) is suspended in the central longitudinal area of the back rest (1) with its upper end (17) in relation to the main longitudinal axis of the back rest (1), and extends at least as far as the area of the seat surface (9) of the seat part (3) with its front end (23) in the hanging position.

6. Seat according to Claim 5, **characterised in that** the strip (15) is suspended on the relevant associated side frame (5) of the back rest frame (7) in both corner areas of its upper end (17).

7. Seat according to one of the Claims 1 to 6, **characterised in that** the tensioning means engaging the lower end (23) of the strip (15) comprises tensioning members (25), which each engage the strip (15) in the lower side corner areas of its lower end (23).

8. Seat according to Claim 7, **characterised in that** the tensioning members (25) engage reinforced eyes (21) inserted into the strip (15).

9. Seat according to Claim 7 or 8, **characterised in that** a tensioning means is envisaged, with which differently strong tensioning forces can be selectively created in the tensioning members (25).

10. Seat according to one of the Claims 1 to 9, **characterised in that** the strip (15) extends under an upholstery or covering element (13) located in a spatial area over its lower end (23), and can be moved forward with the area covering the strip (15) by means of the adjustment movement of the strip (15).

## Revendications

1. Siège de passager de véhicule, notamment siège de passager d'avion, comprenant une assise (3) et un dossier (1) qui se trouve dans son cadre (7) et qui a au moins une partie (15) de soutien servant à soutenir une partie du corps concerné de l'utilisateur du siège et mobile au moyen d'un dispositif (25) de réglage par rapport au cadre (7) du dossier, dans lequel il est prévu, comme partie mobile de soutien, une feuille (15) s'étendant entre les bords (5) latéraux du cadre (7) de dossier et suspendue par son extrémité (17) supérieure au cadre (7) de dossier, **caractérisé en ce que** la feuille attaque par son extrémité (23) inférieure voisine de l'assise (3) le dispositif de réglage, qui est sous la forme d'un dispositif (25) de traction et au moyen duquel une force de traction peut être appliquée à l'extrémité (23) inférieure de la feuille (15) pour tirer vers l'avant, rapportée à la direction longitudinale de la surface (9) d'assise de l'assise (3), la feuille par son extrémité (23) inférieure pour la mettre hors d'une position pendant le long du dossier (1).

2. Siège suivant la revendication 1, **caractérisé en ce que** la feuille est formée d'un filet (15).

3. Siège suivant la revendication 2, **caractérisé en ce que** le filet (15) formant la feuille est un filet à mailles fines en cordon ayant une grande résistance à la traction.

4. Siège suivant l'une des revendications 1 à 3, **caractérisé en ce qu'**il est prévu une feuille (15) s'étendant sensiblement sur toute la largeur du dossier (1) d'un longeron (5) à l'autre.

5. Siège suivant l'une des revendications 1 à 4, **caractérisé en ce que** la feuille (15) est suspendue rapportée à l'axe longitudinal principal du dossier (1) par son extrémité (17) supérieure dans la partie longitudinale médiane du dossier (1) et s'étend, dans la position pendant vers le bas, par son extrémité (23) avant au moins jusqu'à la partie de la surface (9) d'assise de l'assise (3).

6. Siège suivant la revendication 5, **caractérisé en ce que** la feuille (15) est suspendue aux deux coins de son extrémité (17) supérieure aux longerons (5), respectivement associés, du cadre (7) de dossier.

7. Siège suivant l'une des revendications 1 à 6, **caractérisé en ce que** le dispositif de traction agissant sur l'extrémité (23) inférieure de la feuille (15) a des éléments (25) de traction, qui agissent respectivement sur les coins latéraux de l'extrémité (23) inférieure de la feuille (15).

8. Siège suivant la revendication 7, **caractérisé en ce que** les éléments (25) de traction pénètrent dans des oeillets (21) de renforcement incorporés à la feuille (15).

9. Siège suivant la revendication 7 ou 8, **caractérisé en ce qu'**il est prévu un dispositif de traction, au moyen duquel des forces de traction d'intensités différentes peuvent être produites à volonté dans les éléments (25) de traction.

10. Siège suivant l'une des revendications 1 à 9, **caractérisé en ce que** la feuille (15) s'étend dans la partie de surface se trouvant au-dessus de son extrémité (23) inférieure en dessous d'un élément (13) de rembourrage ou de couverture qui, dans la partie recouvrant la feuille (15), est mobile vers l'avant avec elle par le mouvement de réglage de la feuille (15).
